# EUROPÄISCHE PATENTSCHRIFT

(11) **EP 0 818 728 B1**
(45) Veröffentlichungstag und Bekanntmachung des Hinweises auf die Patenterteilung: **03.01.2007**
(21) Anmeldenummer: 97109348.9
(22) Anmeldetag: 05.06.1997
(51) Int. Cl.: G06F 9/45, G06F 9/455, G06F 9/318

(54) **Verfahren zur Behandlung von indizierten Sprüngen bei einer Codetransformation**
Method of processing indexed jumps during code transformation
Méthode pour traiter des sauts indexés dans une transformation de code

(30) Priorität: 11.06.1996 DE 19623320
(43) Veröffentlichungstag der Anmeldung: 14.01.1998
(73) Patentinhaber: Fujitsu Siemens Computers GmbH, 80807 München (DE)
(72) Erfinder: Stadel, Manfred, 81735 München (DE); Weber, Christian, 85586 Poing (DE)
(74) Vertreter: Epping - Hermann - Fischer

(56) Entgegenhaltungen:
- EP-A- 0 570 646
- SOFTWARE - PRACTICE AND EXPERIENCE, SEPT. 1981, UK, Bd. 11, Nr. 9, ISSN 0038-0644, Seiten 929-942, XP002040457 SALE A: "The implementation of case statements in Pascal"

## Beschreibung

Die Erfindung betrifft ein Verfahren zur Behandlung von indizierten Sprüngen bei einer Transformation von hardwarespezifischem Assemblerquellcode in Programmcode für eine andere Hardware mit einer unterschiedlichen Rechnerarchitektur.

Die Architektur eines Rechners ist vor allem durch die grundlegende Struktur seines Prozessors, also durch die Anzahl und Größe der Register, die verwendeten Datentypen, die unterstützten arithmetischen und logischen Operationen usw., gekennzeichnet. In der Regel wird die Architekturdefinition eines Rechners durch seinen Befehlssatz beschrieben, der alle elementaren Instruktionen des zugrundeliegenden Prozessors umfaßt.

Viele der heute eingesetzten Rechner besitzen sog. CISC-Prozessoren, die über einen umfangreichen Befehlssatz mit teilweise sehr komplexen und leistungsfähigen Einzelbefehlen verfügen (CISC = Complex Instruction Set Computer). Dabei treten auch oft Befehle auf, die zeitaufwendige Speicher-Speicher-Operationen durchführen. In zunehmendem Maße kommen jedoch in modernen Computern auch sog. RISC-Prozessoren (RISC = Reduced Instruction Set Computer) zum Einsatz. Ihr Befehlssatz ist in bezug auf Anzahl, Komplexität und Leistungsfähigkeit der einzelnen Instruktionen gegenüber einem CISC-Befehlssatz deutlich reduziert und alle arithmetischen und logischen Operationen werden ohne Beteiligung des Speichers von Register zu Register durchgeführt. Zu Zeiten, als Prozessoren wesentlich schneller als Speicherbausteine waren, hatten CISC-Prozessoren meist deutliche Vorteile gegenüber RISC-Prozessoren, da sie im Schnitt weniger Instruktionen benötigen, um die gleiche Aufgabe auszuführen. Heutige Halbleiterspeicher sind jedoch schnell genug, um Wartezeiten für den Prozessor weitgehend zu vermeiden. Auch spezielle sog. "Instruction Prefetch"-Techniken und die Verwendung von Caches reichen aus um den Geschwindigkeitsanforderungen von RISC-Prozessoren nachzukommen. Außerdem spielt der für RISC-Code gegenüber äquivalentem CISC-Code im Schnitt höhere Speicherbedarf keine bedeutende Rolle mehr. Dadurch kommen zunehmend die Herstellungs- und vor allem Performance-Vorteile von Rechnern mit RISC-Architektur zum tragen.

Die zunehmenden Anforderungen an das Leistungsvermögen von Rechenanlagen jeder Größenordnung machen vielfach den Wechsel zu neuen Computergenerationen, z.B. zu RISC-Computern, erforderlich. Um jedoch die höhere Leistungsfähigkeit dieser Rechner ausnützen zu können, ohne dabei auf die bereits vorhandene, umfangreiche und wertvolle Softwarebasis verzichten zu müssen, ist eine Transformation der vorhandenen Programme für Betriebssysteme, Anwendungen, Sprachcompiler etc. nötig. Die im Quellcode einer standardisierten Hochsprache vorliegenden Teile dieser Programme können meist durch einfache Neucompilierung auf dem im folgenden als Zielhardware bezeichneten neuen Rechner transformiert werden. Dagegen machen die hardwareabhängigen, z.B. in Assemblersprache geschriebenen Programmteile eine wesentlich aufwendigere Transformation erforderlich, die zumindest weitgehend mit Hilfe von spezieller Transformationssoftware automatisiert sein muß, um unverhältnismäßigen Aufwand an Zeit und Kosten zu vermeiden.
Die Verwendung von Emulationsprogrammen, die die Ursprungshardware auf der Zielhardware simulieren, kommt in der Regel wegen der vergleichsweise schlechten Performance der Software unter einer Emulation höchstens für nicht zeitkritische Programmteile in Frage.

Bei einer Assemblertransformation dient mnemonisch angegebener Assemblercode als Quellcode für die Transformation, wodurch weitgehend eine klare Unterscheidung von Befehlen und Daten sowie von symbolischen und absoluten Sprüngen erreicht wird. Daneben sind, z.B. durch WO 92/15939, auch Transformationsverfahren bekannt, die von einem bereits als Objektcode vorliegenden Programm für die Ursprungshardware ausgehen, wobei jedoch Kriterien benötigt werden, mit denen Befehle und Daten im Eingangscode gegeneinander abgegrenzt werden können.

Berechnete und indizierte Sprünge, bei denen das jeweilige Sprungziel erst zur Laufzeit des Programmcodes bestimmt wird, bereiten bei einer Codetransformation besondere Schwierigkeiten, da sich die Befehlslängen eines Befehls im Quellcode und der semantisch äquivalenten Befehlsfolge im transformierten Code für die Zielhardware in der Regel unterscheiden. Wird daher im Quellcode für die Ursprungshardware ein Sprungziel nicht als symbolische Sprungmarke angegeben, sondern dynamisch berechnet, so geht die Adreßrechnung von den Adreßpegelverhältnissen auf der Ursprungshardware aus, die auf der Zielhardware jedoch nicht mehr zutreffen.

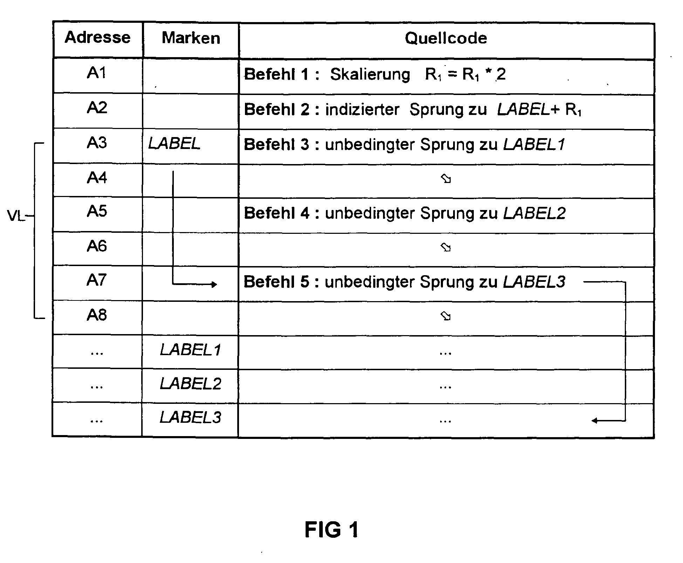

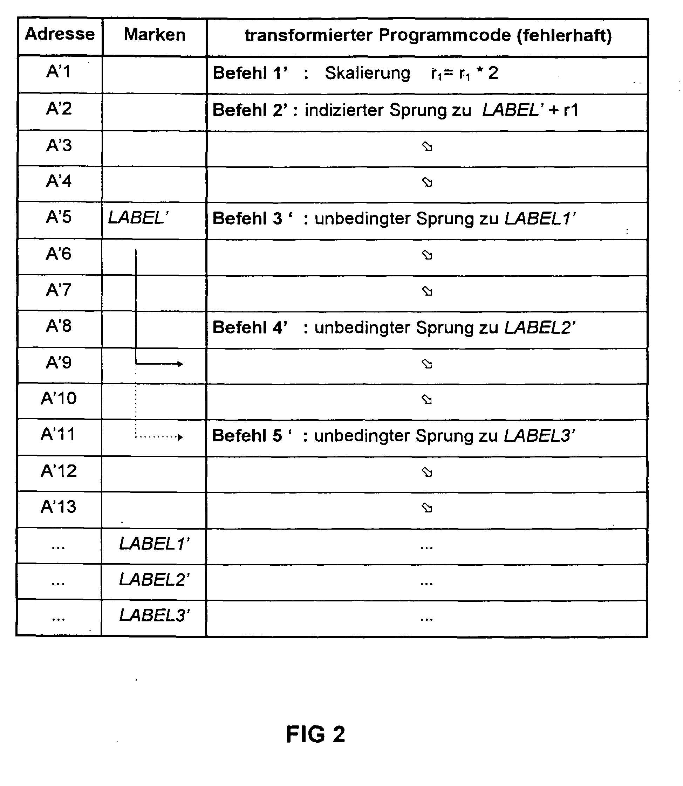

In FIG 1 und FIG 2 wird diese Problematik am Beispiel eines indizierten Sprunges erläutert:
Die in FIG 1 dargestellte Befehlsfolge für die Ursprungshardware, abgelegt in den Adressen A1 bis A8, erwartet im Register R₁ einen Index, der zuvor z.B. durch eine Benutzereingabe dynamisch festgelegt wurde, und mit dem einer der unbedingten Sprungbefehle 3 bis 5 in einer Verzweigungsliste VL als Sprungziel für den indizierten Sprungbefehl 2 ausgewählt wird. Da im Beispiel jeder der Befehle 3 bis 5 jeweils zwei Adressen A3/A4, A5/A6 bzw. A7/A8 belegt, wird der Index durch den Befehl 1 noch mit einem Faktor zwei skaliert. Der Befehl 2 ist ein Sprungbefehl, dessen Sprungziel durch die Sprungmarke *LABEL* in Adresse A3 und den darauf bezogenen, im Register R1 gespeicherten, skalierten Index bestimmt wird. Für einen Indexwert "2" beispielsweise, ergibt sich durch die Skalierung eine Sprunglänge von vier Adressen ab der Sprungmarke *LABEL* und damit, wie eingezeichnet, der Befehl 5 als Sprungziel. Von diesem unbedingten Sprungbefehl aus, der mit dem Index ausgewählt und durch den indizierten Sprungbefehl 2 angesprungen wird (im Beispiel Befehl 5), wird dann weiter zum entsprechenden Sprungziel dieses Sprungbefehls (im Beispiel *LABEL3*) verzweigt.

In FIG 2 ist eine Befehlsfolge für die Zielhardware dargestellt, die aus dem Quellcode in FIG 1 hervorgeht, indem jeder Befehl für sich in einen semantisch äquivalenten Befehl bzw. eine semantisch äquivalente Befehlsfolge übersetzt, und das Register R₁ der Ursprungshardware auf ein entsprechendes Register r₁ der Zielhardware abgebildet wird. Aus dem ursprünglichen Befehl 2 entsteht dabei z.B. ein Befehl 2' mit einer Länge von drei Adressen, und die Befehle 3 bis 5 gehen in dazu äquivalente Befehle 3' bis 5' über, die jedoch nicht mehr zwei, sondern jeweils drei Adressen A'5-A'7, A'8-A'10 bzw. A'11-A'13 belegen. Die Sprungmarke *LABEL* beim Befehl 3 im Quellcode wird bei der Transformation in eine Sprungmarke *LABEL*' beim entsprechenden Befehl 3' und die Sprungmarken *LABEL1* bis *LABEL3* in entsprechende Sprungmarken *LABEL1*' bis *LABEL3'* überführt. Für den im Beispiel gewählten Indexwert "2", ergibt sich wiederum eine Sprunglänge von vier Adressen, jetzt gezählt ab der Sprungmarke *LABEL*'. Als Sprungziel wird jedoch wegen der geänderten Befehlslängen nicht der Befehl 5' als richtiges Sprungziel (gestrichelter Pfeil), sondern die zweite vom vorhergehenden Befehl 4' belegte Adresse berechnet (durchgezogener Pfeil). Der transformierte Code läuft damit nicht mehr korrekt ab.

Im Rahmen bisher bekannter Verfahren zur Codetransformation, werden indizierte Sprünge im zu transformierenden Quellcode daher entweder vor der eigentlichen Transformation in semantisch äquivalente Befehlsfolgen abgewandelt, bei denen die o.g. Problematik nicht mehr auftritt, oder die entsprechenden Programmteile müssen zur Laufzeit auf der Zielhardware durch Emulation abgearbeitet werden.

Ein der Abarbeitung von problematischen Programmteilen durch Emulation ähnliches Verfahren ist aus der Druckschrift EP 0 570 646 A1 bekannt. Bei diesem Verfahren wird Code für eine Ursprungshardware vor der Ausführung auf einer Zielhardware abschnittsweise bis zum Auftreten eines Sprunges mit einem zur Transformationszeit unbekannten Sprungziel oder einer unbekannten Sprungbedingung transformiert. Der transformierte Abschnitt wird danach zunächst ausgeführt, wobei die zur Transformationszeit noch unbekannten Sprungziele oder - bedingungen bestimmt werden. Daraufhin wird die Codetransformation fortgesetzt.

Die Erfindung stellt sich die Aufgabe, ein Verfahren zur korrekten Transformation von indizierten Sprüngen in eine Verzweigungliste aus unbedingten Sprungbefehlen anzugeben, bei dem eine vorherige Abwandlung des Quellcodes entfällt und auf die Emulation oder abschnittsweise Transformation von entsprechendem Programmcode für die Ursprungshardware verzichtet werden kann.

Gelöst wird diese Aufgabe durch ein Verfahren, das die im Patentanspruch 1 angegebenen Merkmale aufweist.

Ein im Assemblerquellcode auftretender indizierter Sprungbefehl für eine Verzweigung in eine Verzweigungsliste aus N > 1 unbedingten Sprungbefehlen wird in einen semantisch äquivalenten Sprungbefehl im Objektcode (OC2) für die Zielhardware (M2) übersetzt. Zusätzlich wird ein Zähler eingerichtet und mit einem Startwert initialisiert.
Anstelle der Verzweigungsliste wird eine Anweisungssequenz erzeugt, die, je nach Variante, N bzw. N-1 der jeweils zu einem der N Sprungbefehle der Verzweigungsliste korrespondierende Instruktionen oder Befehlsfolgen umfaßt. Diese Instruktionen bzw. Befehlsfolgen weisen jeweils die gleiche Länge wie die dazu korrespondierenden unbedingten Sprungbefehle auf und modifizieren zur Laufzeit jeweils auf eine festgelegte Weise den Wert eines Zählers. Eine indizierte Verzweigung zum n-ten Sprungbefehl der Verzweigungsliste im Quellcode führt also wegen dieser Übereinstimmung der Befehlslängen zu einem indizierten Sprung zur n-ten Instruktion bzw. Befehlsfolge der genannten Anweisungssequenz im transformierten Code. Nur die ab der angesprungenen Instruktion bzw. Befehlsfolge noch zu durchlaufenden Anweisungen der Sequenz modifizieren dann jeweils den Zähler und erzeugen so eine eindeutigen Zuordnung des Zählerwertes zur Einsprungstelle des indizierten Sprunges in die Anweisungssequenz.
Bei der Transformation erfolgt außerdem eine Adreßumsetzung, bei der zu den Sprungzielen der Sprungbefehle im Assemblerquellcode jeweils die entsprechende Programmstelle im Objektcode für die Zielhardware bestimmt wird.
Zusätzlich wird Programmcode für eine Verzweigung auf die auf die Zielhardware umgesetzten Adressen generiert, wobei der Programmcode bei seiner Ausführung nach dem Durchlaufen der Anweisungssequenz anhand des Zählerwertes und anhand der Umsetzung der Adressen das auf den Objektcode für die Zielhardware bezogene Sprungziel des korrespondierenden unbedingten Sprungbefehls der Verzweigungsliste des Assemblercodes ermittelt und auf dieses Sprungziel verzweigt.

Ein im Assemblerquellcode auftretender, indizierter Sprung in eine Verzweigungsliste aus unbedingten Sprungbefehlen wird also durch das erfindungsgemäße Verfahren so transformiert, daß auch im Objektcode für die Zielhardware trotz der auf die Adreßverhältnise der Ursprungshardware bezogenen Sprunglängenberechnung des indizierten Sprunges jeweils das korrekte Sprungziel ermittelt und dorthin verzweigt wird. Dabei entfällt eine Emulation von entsprechenden Programmteilen für die Ursprungshardware ebenso wie eine vorherige Abwandlung des Quellcodes, da dort auftretende indizierte Sprünge in eine Verzweigungsliste aus unbedingten Sprungbefehlen schon bei der Transformation erkannt und in auf der Zielhardware ablauffähigen, korrekten Programmcode übersetzt werden.

Vorteilhafte Aus- und Weiterbildungen des erfindungsgemäßen Verfahrens sind Gegenstand der Unteransprüche.

Bei einer ersten Ausgestaltung der Erfindung - Anspruch 2 - wird als Zähler ein Speicherbereich auf der Zielhardware verwendet, wobei der Zählerstand jeweils dem aktuellen in dem Speicherbereich abgelegten Wert entspricht. Die Realisierung des Zählers als Speicherbereich ist vor allem dann angebracht, wenn auf der Zielhardware zu wenig Register zur Verfügung stehen, um eines davon allein für den Zähler reservieren zu können.

Sind jedoch auf der Zielhardware ausreichend viele freie Register vorhanden, so ist als alternative Ausgestaltung - nach Anspruch 3 - die Realisierung des Zählers durch ein reserviertes Register zweckmäßig, wobei die Modifizierung des Zählerwertes direkt durch entsprechende Registeroperationen erfolgt. Die Verwendung eines Registers für den Zähler ist insbesondere dann von Vorteil, wenn wie bei einer Zielhardware mit RISC-Architektur, als Speicherbefehle nur Schreib- oder Leseoperationen, nicht aber arithmetische Operationen vorgesehen sind. Umständliche und zeitaufwendige Speicherzugriffe entfallen damit.

Nach einer weiteren Ausgestaltung des erfindungsgemäßen Verfahrens - Anspruch 4 - werden die den Sprungzielen der unbedingten Sprungbefehle in der Verzweigungsliste entsprechenden Programmstellen im Objektcode für die Zielhardware als Adressen in einer Tabelle abgelegt. Zur Laufzeit des transformierten Codes wird dann aus dem Zählerwert nach dem Durchlaufen der Anweisungssequenz aus Instruktionen bzw. Befehlsfolgen ein Index bestimmt, mit dessen Hilfe aus der Tabelle die zu ermittelnde Sprungzieladresse im Objektcode für die Zielhardware entnommen wird. Bei der Verwendung einer solchen Tabelle ergibt sich ein besonders kompakter Programmcode. Dies ist vor allem dann von Vorteil, wenn die Verzweigungsliste eine große Anzahl verschiedener Sprungziele umfaßt.

Nach einer anderen Ausgestaltung der Erfindung - Anspruch 5 - ermittelt der bei der Transformation generierte Programmcode bei seiner Ausführung nach dem Durchlaufen der Anweisungssequenz das Sprungziel für die Verzweigung auf der Zielhardware wie folgt:
Der Zählerwert wird schrittweise jeweils durch Anwendung einer zur Modifikationsoperation inversen Operation, solange verändert, bis sich einer Übereinstimmung mit einem Vergleichswert ergibt, der gleich einem Initialwert des Zählers ist (Es sind auch Variationen möglich, bei denen der Vergleichswert aus dem Initialwert durch Anwendung der Modifikationsoperation hervorgeht). Jedem Schritt wird dabei jeweils eine dem Sprungziel eines Sprungbefehls der Verzweigungsliste entsprechende Programmstelle im Objektcode für die Zielhardware so zugeordnet, daß beim Eintritt der Übereinstimmung die dem entsprechenden Schritt zugeordnete Programmstelle das zu ermittelnde Sprungziel auf der Zielhardware darstellt. Diese Methode besonders dann von Vorteil, wenn auf der Zielhardware ein Befehl existiert, der sowohl die Modifikationsoperation (bzw. die dazu inverse Operation) als auch den Vergleich und bei Übereinstimmung die entsprechende Verzweigung durchführt. Damit läßt sich dann ein effizienter und kompakter Programmcode generieren.

Nach einer weiteren Ausbildung der Erfindung - Anspruch 6 - wird der Zähler zunächst auf einen Wert ungleich Null initialisiert, und die genannten Instruktionen bzw. Befehlsfolgen modifizieren bei ihrer Ausführung jeweils den Wert des Zählers durch Multiplikation mit einer für jede Modifikation gleichen Konstante, die gleich einer Potenz 2^{m} der Zahl 2 gesetzt wird. Die Multiplikation des Zählerwertes mit dieser Konstante kann dann bei der Programmausführung auch durch Verschieben des den Zählerwert darstellenden Bitmusters um *m* Bitpositionen erfolgen. Die entsprechenden Verschiebebefehle sind dabei in der Regel kürzer und schneller als äquivalente Multiplikationsbefehle. Besonders vorteilhaft ist diese Weiterbildung des Verfahrens, wenn auf der Zielhardware Befehle existieren, die sowohl eine Verschiebung eines Bitmusters als auch einen anschließenden Vergleich mit einem Vergleichswert durchführen.

Nachstehend werden Einzelheiten des erfindungsgemäßen Verfahrens unter Bezugnahme auf Zeichnungen (Figuren 3 bis 6) näher erläutert.

Es zeigt
Fig 1 Eine Tabelle mit Quellecode Fig 2 Eine Tabelle mit transformiertem Programmcode (fehler haft) FIG 3 schematisch die Abbildung der Register der Ursprungshardware bzw. des Quellcodes auf Register bzw. entsprechenden Programmcode der Zielhardware bei der Transformation;
FIG 4 ein Flußdiagramm zur Behandlung von indizierten Verzweigungen bei der Codetransformation;
FIG 5 für eine Ausgestaltung der Erfindung an einem Beispiel die Struktur des für einen indizierten Sprung bei der Transformation erzeugten Programmcodes;
FIG 6 für eine andere Ausgestaltung der Erfindung an einem Beispiel die Struktur des für einen indizierten Sprung bei der Transformation erzeugten Programmcodes;

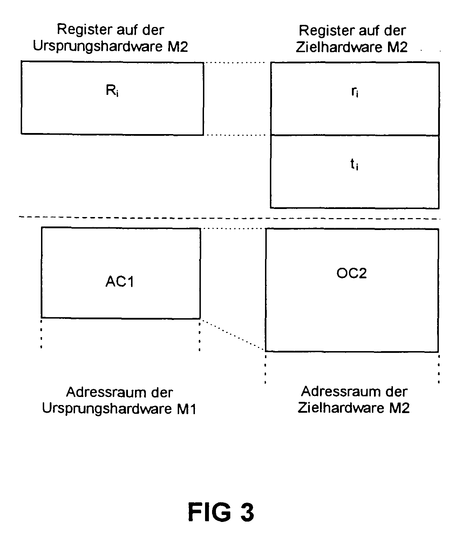

Bei der Transformation von für eine Ursprungshardware M1 geschriebenem Assemblerquellcode AC1 in Objektcode OC2 für eine Zielhardware M2 werden, wie in FIG 3 schematisch dargestellt, die Register Rᵢ der Ursprungshardware M1 auf in Anzahl und Größe entsprechende Register rᵢ der Zielhardware abgebildet. Gegebenenfalls werden zusätzlich weitere auf der Zielhardware vorhandene Register tᵢ durch den transformierten Programmcode genutzt.

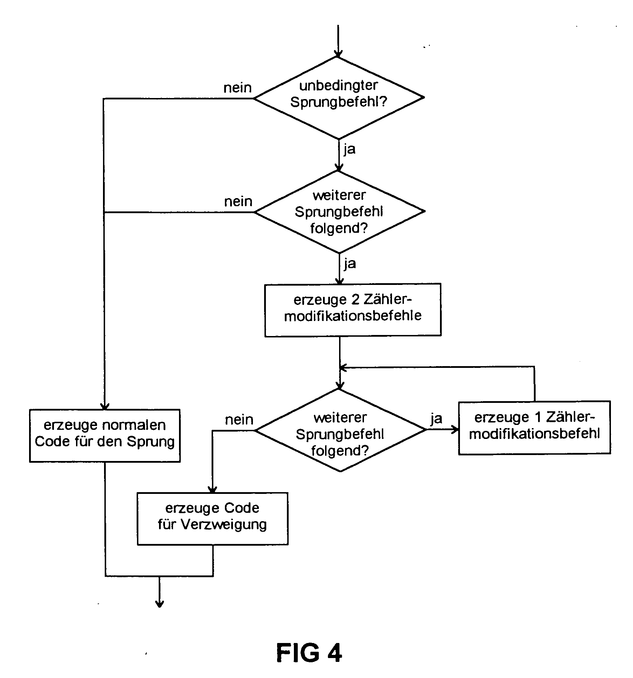

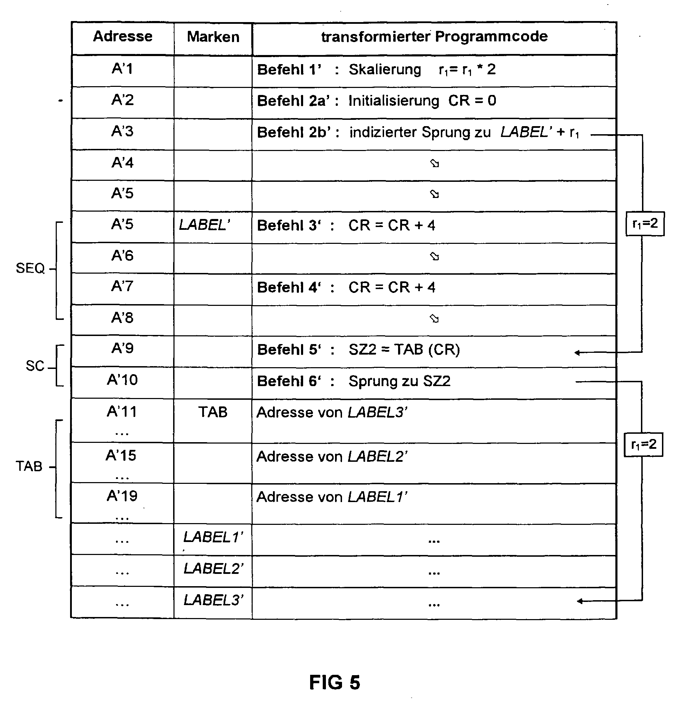

Ein im Assemblerquellcode AC1 auftretender Sprung in eine Verzweigungsliste VL aus unbedingten Sprungbefehlen - siehe FIG 1 - wird gemäß dem in FIG 4 gezeigten Flußdiagramm transformiert. Ist bei der Transformation der nächste zu übersetzende Befehl im Assemblerquellcode AC1 ein Sprungbefehl, so wird zunächst geprüft, ob es sich um einen unbedingten Sprungbefehl, also um einen Sprung dessen Ausführung nicht von der Erfüllung einer Bedingung abhängig ist, handelt. Ist dies nicht der Fall, so wird der Sprungbefehl in einen entsprechenden Befehl im Objektcode OC2 für die Zielhardware übersetzt. Andernfalls wird geprüft, ob ein weiterer unbedingter Sprungbefehl auf den ersten folgt, d.h. ob eine Verzweigungsliste aus unbedingten Sprüngen vorliegt. Wenn dies nicht der Fall ist, wird der unbedingte Sprungbefehl ebenfalles direkt in einen entsprechenden Befehl im Objektcode OC2 für die Zielhardware übersetzt. Anderenfalls liegt eine Verzweigungsliste VL aus N>1, d.h. aus wenigstens zwei, unbedingten Sprungbefehlen vor. Für jeden der zwei bereits erkannten unbedingten Sprungbefehle wird im Objektcode OC2 für die Zielhardware M2 eine Instruktion oder Befehlsfolge zur Modifikation des Wertes CR eines beispielsweise durch ein reserviertes Register der Zielhardware realisierten Zählers generiert. Ausschlaggebend ist dabei, daß die Länge dieser Instruktion bzw. Befehlsfolge im transformierten Code gleich der Befehlslänge des korrespondierenden unbedingten Sprungbefehls im Quellcode ist. Ebenso wird für jeden weiteren, zumindest jedoch für N-1 der in der Verzweigungsliste noch folgenden unbedingten Sprungbefehle jeweils eine solche Instruktion oder Befehlsfolge zur Modifizierung des Zählerwertes CR erzeugt (Eine Variante, bei der für einen der Sprungbefehle die Generierung einer Instruktion oder Befehlsfolge zur Modifizierung des Zählerwertes CR entfällt, wird im Zusammenhang mit FIG 5 beschrieben.). Zusätzlich zu der auf diese Weise aus der Verzweigungsliste VL generierten Anweisungssequenz SEQ wird im Objektcode OC2 für die Zielhardware M2 Programmcode für die eigentliche Verzweigung, deren Sprungziel aus dem Zählerwert CR nach dem Durchlaufen der Anweisungssequenz SEQ ermittelt wird, erzeugt.

Ein konkretes Beispiel für die Struktur des aus einem indizierten Sprung hervorgegangenen transformierten Programmcodes ist für eine Ausgestaltung der Erfindung in FIG 5 gezeigt. Ein Skalierungsbefehl 1', abgelegt in einer Adresse A'1 des Adreßbereichs der Zielhardware M2, geht direkt aus dem semantisch äquivalenten Befehl 1 im Quellcode - siehe FIG 1 - hervor, wobei statt des Registers R₁ der Ursprungshardware M1 ein entsprechendes Register r₁ der Zielhardware M2 verwendet wird. Aus dem ursprünglichen indizierten Sprungbefehl 2 zu einem Sprungziel *LABEL*+R₁ wird bei der Transformation ein entsprechender Sprungbefehl 2b' zu einem Sprungziel *LABEL*'+r₁ erzeugt, wobei die Marke *LABEL*' durch die bei der Transformation erfolgende Adreßumsetzung aus der ursprünglichen Marke *LABEL* im Quellcode hervorgeht. In Befehl 2a' wird zusätzlich der Zähler initialisiert. Eine in den Adressen A'5 bis A'8 abgelegte Anweisungssequenz SEQ, die im transformierten Code anstelle der Verzweigungsliste VL des Quellcodes generiert wird, umfaßt zwei Befehle 3' bzw. 4', die jeweils den Wert CR eines Zählers durch Addition der Zahl 4 inkrementieren. Dieser Wert für das Inkrement entspricht dabei der Länge jeweils einer Eintragung in eine ab Adresse A'11 bei der Transformation generierte Tabelle TAB, in der die zu den ursprünglichen Sprungzielen *LABEL1* bis *LABEL3* der Sprungbefehle in der Verzweigungsliste VL korrespondierenden Sprungziele *LABEL1'* bis *LABEL3*' im transformierten Code als Adressen abgelegt sind. In den Adressen A'9 bzw. A'10 befindet sich der eigentliche Code SC für die Verzweigung. Das Sprungziel SZ2 der Verzweigung wird dabei in Befehl 5' mit Hilfe des Zählerwerts CR als Index aus der Tabelle TAB entnommen, und Befehl 6' stellt den zugehörigen Sprung zu diesem Sprungziel SZ2 dar.
Wird der transformierte Code z.B. mit einem Startwert r₁=2 im Register r₁ ausgeführt, so ergibt sich durch die Skalierung zunächst ein Wert r₁=4 als Index für den indizierten Sprung in Adresse A'3, der somit zur vierten Adresse nach der Marke *LABEL*', also zum Befehl 5', verzweigt. Der Wert CR des Zählers entspricht dann nach wie vor seinem Initialwert CR=0, da die Inkrementbefehle 3' und 4' für den im Beispiel gewählten Index übersprungen wurden. Die Tabelle TAB enthält als ersten Eintrag TAB(CR=0), d.h. ab der Adresse A'11, die zum Sprungziel *LABEL3* des dritten Sprungbefehls der Verzweigungsliste VL des Quellcodes korrespondierende Sprungzieladressse. Mit dem Sprungbefehl 6' wird somit zum korrekten Sprungziel (SZ2=Adresse von *LABEL3*') verzweigt.

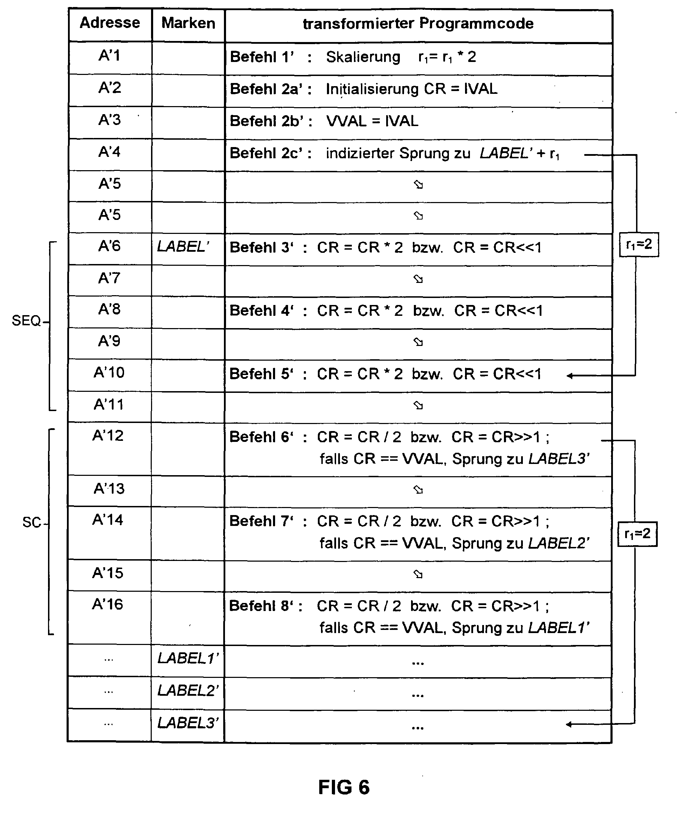

Ein Beispiel für die Struktur des aus einem indizierten Sprung nach einer anderen Variante der Erfindung hervorgegangenen transformierten Programmcodes ist in FIG 6 dargestellt. Der Befehl 1' dient dabei wiederum der Skalierung des im Register r₁ gespeicherten Startwertes für den Index. Die Initialisierung eines Zählers auf einen Initialwert IVAL#0 erfolgt durch den Befehl 2a'. Ein weiterer Befehl 2b' setzt einen Vergleichswert VVAL gleich dem Initialwert IVAL. Eine Modifikationsoperation sei durch die durch Multiplikation mit einer vorgegebenen, als Potenz 2^{m} mit m∈Z\{0} darstellbaren Konstante definiert. Im konkreten Beispiel sei dabei m=1, so daß die Modifikation des Zählerwertes CR äquivalent ist zu einer Verschiebung CR=CR<<1 des seinen Wert darstellenden Bitmusters um eine Bitposition. Der indizierte Sprung zum Sprungziel *LABEL*'+r₁ steht als Befehl 2c' ab Adresse A'4. Eine Anweisungssequenz SEQ umfaßt die Befehle 3' bis 5', die bei der Transformation jeweils aus einem der Sprungbefehle der Verzweigungsliste VL im Quellcode hervorgehen. Bei ihrer Ausführung modifizieren sie jeweils den Wert CR des Zählers durch Multiplikation mit der vordefinierten Konstante, im Beispiel also mit Zwei. Der eigentliche Code SC für die Verzweigung besteht aus den Befehlen (Schritten) 6' bis 8'. Durch die Anweisungen dieser Befehlsfolge wird zur Laufzeit nach dem Durchlaufen der Anweisungssequenz SEQ schrittweise der Zählerwert CR zurückverschoben bzw. durch die genannte Konstante geteilt und mit dem Vergleichswert VVAL verglichen. Dabei ist jedem Schritt jeweils eine dem Sprungziel eines Sprungbefehls der Verzweigungsliste VL entsprechende Programmstelle im transformierten Code so zugeordnet, daß die dem zur Übereinstimmung des Zählerwertes CR mit dem Vergleichswert VVAL führenden Schritt zugeordnete Programmstelle das korrekte Sprungziel für die Verzweigung darstellt. Beim Eintreten der Übereinstimmung erfolgt dann im entsprechenden Schritt ein Sprung zu diesem Sprungziel.

Der Initialwert IVAL des Zählers sei beispielsweise gleich Eins, womit sich auch ein Vergleichswert VVAL=1 ergibt. Wird dann der transformierte Code z.B. mit einem Startwert r₁=2 im Register r₁ ausgeführt, so führt die Skalierung zunächst zu einem Wert r₁=4 als Index für den indizierten Sprung, der somit zur vierten Adresse nach der Marke *LABEL*', also zum Befehl 5', verzweigt. Dieser Befehl modifiziert den Zählerwert CR durch Multiplikation mit 2 bzw. Verschieben des entsprechenden Bitmusters um eine Stelle, wodurch sich ein Zählerwert CR=2 ergibt. Der darauffolgende Vergleich von Zählerwert CR und Vergleichswert VVAL in Befehl 6' liefert nach der Umkehrmodifikation CR=CR>>1 bereits eine Übereinstimmung CR==VVAL, so daß zu der diesem ersten Schritt des Verzweigungscodes SC zugeordneten Sprungmarke *LABEL3*' verzweigt wird.

## Patentansprüche

1. Verfahren zur Transformation von für eine Ursprungshardware (M1) geschriebenem Assemblerquellcode (AC1) in Objektcode (OC2) für eine Zielhardware (M2) unterschiedlicher Rechnerarchitektur, wobei ein im Assemblerquellcode (AC1) auftretender indizierter Sprung zu einer Verzweigungsliste (VL) aus N>1 unbedingten Sprungbefehlen transformiert wird, indem
- im Objektcode (OC2) für die Zielhardware (M2) ein Zähler eingerichtet und mit einem Zählerwert (CR) initialisiert wird,
- der im Assemblerquellcode (AC1) indizierte Sprungbefehl in einen semantisch äquivalenten Sprungbefehl im Objektcode (OC2) für die Zielhardware (M2) übersetzt wird,
- eine Umsetzung von Adressen der Ursprungshardware (M1) auf Adressen der Zielhardware (M2) derart durchgeführt wird, daß eine Beziehung zwischen den Sprungzielen der Sprungbefehle in der Verzweigungsliste (VL) im Assemblerquellcode (AC1) und den zu den Sprungbefehlen zugehörigen Programmstellen im Objektcode (OC2) für die Zielhardware (M2) hergestellt wird,
- im Objektcode (OC2) für die Zielhardware (M2) anstelle der Verzweigungsliste (VL) des Assemblerquellcodes (AC1) eine Anweisungssequenz (SEQ) mit wenigstens N-1 jeweils zu einem der N Sprungbefehle der Verzweigungsliste (VL) korrespondierende Instruktionen oder Befehlsfolgen erzeugt wird, in die von dem semantisch äquivalenten Sprungbefehl verzweigt wird, wobei die Befehlsfolgen zur Laufzeit jeweils den Wert (CR) des Zählers in zur jeweiligen Befehlsfolge zuordenbaren weise modifizieren und die Befehlslänge der jeweiligen Folge der Befehlslänge des unbedingten Sprungbefehls in der Verzweigungsliste (VL) entspricht; und
- Programmcode (SC) für eine Verzweigung auf die auf die Zielhardware (M2) umgesetzten Adressen generiert wird, wobei der Programmcode (SC) bei seiner Ausführung nach dem Durchlaufen der Anweisungssequenz (SEQ) anhand des Zählerwertes (CR) und anhand der Umsetzung der Adressen das auf den Objektcode (OC2) für die Zielhardware (M2) bezogene Sprungziel des korrespondierenden unbedingten Sprungbefehls der Verzweigungsliste (VL) des Assemblercodes (AC1) ermittelt und auf dieses Sprungziel verzweigt.

2. Verfahren nach Anspruch 1,
**dadurch gekennzeichnet,**
**daß** als Zähler ein Speicherbereich auf der Zielhardware (M2) verwendet wird.

3. Verfahren nach Anspruch 1,
**dadurch gekennzeichnet,**
**daß** als Zähler ein Register auf der Zielhardware (M2) verwendet wird.

4. Verfahren nach einem der vorhergehenden Ansprüche,
**dadurch gekennzeichnet,**
- **daß** die gemäß der Adreßumsetzung den Sprungzielen der unbedingten Sprungbefehle der Verzweigungsliste (VL) entsprechenden Sprungziele im Objektcode (OC2) für die Zielhardware (M2) in einer Tabelle (TAB) abgelegt sind; und
- **daß** aus dem Wert (CR) des Zählers nach dem Durchlaufen der Anweisungssequenz (SEQ) ein Index bestimmt wird, mit dessen Hilfe aus der Tabelle (TAB) das zu ermittelnde Sprungziel im Objektcode (OC2) für die Zielhardware (M2) entnommen wird.

5. Verfahren nach einem Ansprüche 1 bis 3,
**dadurch gekennzeichnet,**
**daß** der Programmcode für eine Verzweigung bei seiner Ausführung das Sprungziel für die Verzweigung auf der Zielhardware ermittelt, indem
- der Zählerwert schrittweise jeweils durch Ausführung einer zur Modifikationsoperation inversen Operation bis zur seiner Übereinstimmung mit einem Vergleichswert (VVAL), der gleich einem Initialwert (IVAL) des Zählers ist oder daraus durch Anwendung der Modifikationsoperation hervorgeht, verändert wird; wobei
- jedem Schritt jeweils eine dem Sprungziel eines Sprungbefehls der Verzweigungsliste (VL) entsprechende Programmstelle im Objektcode (OC2) für die Zielhardware (M2) so zugeordnet ist, daß beim Eintritt der Übereinstimmung die dem entsprechenden Schritt zugeordnete Programmstelle das zu ermittelnde Sprungziel darstellt.

6. Verfahren nach einem der vorhergehenden Ansprüche,
**dadurch gekennzeichnet,**
**daß** bei der Programmausführung der Zähler auf einen Wert (IVAL) ungleich Null initialisiert wird, und die genannten Instruktionen bzw. Befehlsfolgen jeweils den Wert (CR) des Zählers durch Multiplikation mit einer Konstante modifizieren, die gleich einer Potenz 2^{m} der Zahl 2 ist, so daß die Modifikation durch Verschieben des den Zählerwert (CR) binär darstellenden Bitmusters um *m* Bitpositionen erfolgt.

## Claims

1. Method for transformation of assembler source code (AC1) written for originating hardware (M1) into object code (OC2) for target hardware (M2) of a different computer architecture, an indexed jump that occurs in the assembler source code (AC1) being transformed into a jump list (VL) of N > 1 unconditional jump instructions, in that
- in the object code (OC2) for the target hardware (M2) a counter is set up and is initialized with a count value (CR),
- the jump instruction indexed in the assembler source code (AC1) is translated into a semantically equivalent jump instruction in the object code (OC2) for the target hardware (M2),
- a conversion of addresses of the originating hardware (M1) into addresses of the target hardware (M2) is carried out in such a way that a relationship is established between the branch destinations of the jump instructions in the jump list (VL) in the assembler source code (AC1) and the program locations associated with the jump instructions in the object code (OC2) for the target hardware (M2),
- in the object code (OC2) for the target hardware (M2) instead of the jump list (VL) of the assembler source code (AC1) an instruction sequence (SEQ) with at least N-1 instructions or command sequences each corresponding to one of the N jump instructions of the jump list (VL) is generated, to which a branch is made from the semantically equivalent jump instruction; the command sequences at runtime each modifying the value (CR) of the counter in a manner assignable to the respective command sequence and the instruction length of the respective sequence corresponding to the instruction length of the unconditional jump instruction in the jump list (VL); and
- program code (SC) is generated for a jump to the addresses converted to the target hardware (M2), the program code (SC) in its execution according to the run of the instruction sequence (SEQ) using the count value (CR) and the conversion of the addresses to determine the branch destination related to the object code (OC2) for the target hardware (M2) of the corresponding unconditional jump instruction of the jump list (VL) of the assembler code (AC1), and branching to this branch destination.

2. Method according to Claim 1,
**characterized in that**
as counter a memory area on the target hardware (M2) is used.

3. Method according to Claim 1,
**characterized in that**
as counter a register on the target hardware (M2) is used.

4. Method according to one of the preceding claims,
**characterized in that**
- the branch destinations in the object code (OC2) for the target hardware (M2) which correspond according to the address conversion to the branch destinations of the unconditional jump instructions in the jump list (VL) are stored in a table (TAB); and that
- from the value (CR) of the counter according to the run of the instruction sequence (SEQ) an index is determined, with the help of which the branch destination to be determined in the object code (OC2) for the target hardware (M2) is taken from the table (TAB).

5. Method according to one of Claims 1 to 3,
**characterized in that**
the program code for a jump determines in its execution the branch destination for the jump on the target hardware, **in that**
- the count value is changed stepwise each time by the execution of an operation inverse to the modification operation until it matches a comparison value (VVAL), which is equal to an initial value (IVAL) of the counter or is produced from it by application of the modification operation; wherein
- to each step, in each case a program location in the object code (OC2) for the target hardware (M2), corresponding to the branch destination of a jump instruction of the jump list (VL), is assigned in such a manner that when agreement occurs the program location assigned to the corresponding step is the branch destination to be determined.

6. Method according to one of the preceding claims,
**characterized in that**
during the program execution the counter is initialized to a non-zero value (IVAL), and the cited instructions or command sequences each modify the value (CR) of the counter by multiplication with a constant, which is equal to a power 2^{m} of 2, so that the modification is effected by a shift of m bit positions of the bit pattern representing the count value (CR) in binary form.

## Revendications

1. Procédé pour la transformation de code source assembleur (AC1) écrit pour un matériel originel (M1) en code objet (OC2) pour un matériel cible (M2) de différentes architectures de calcul, un saut indexé se produisant dans le code source assembleur (AC1) étant transformé en une liste de branchements (VL) de N>1 instructions de sauts inconditionnels, en ce que
- dans le code objet (OC2), on aménage un compteur pour le matériel cible (M2) et on l'initialise avec une valeur de compteur (CR),
- l'instruction de saut indexé dans le code source assembleur (AC1) est traduite en une instruction de saut sémantiquement équivalente dans le code objet (OC2) pour le matériel cible (M2),
- une transposition d'adresses du matériel originel (M1) en adresses du matériel cible (M2) est réalisée de manière à établir une relation entre les cibles des sauts des instructions de saut dans la liste de branchements (VL) en code source assembleur (AC1) et les emplacements de programme en code objet (OC2) appartenant aux instructions de saut pour le matériel cible (M2),
- dans le code objet (OC2) pour le matériel cible (M2), à la place de la liste de branchements (VL) du code source assembleur (AC1), on génère une séquence d'instructions (SEQ) avec au moins N-1 instructions ou suites d'instructions correspondant respectivement à une des N instructions de saut de la liste de branchements (VL), vers lesquelles on effectue le branchement à partir de l'instruction de saut sémantiquement équivalente, les suites d'instructions de la durée d'exécution modifiant respectivement la valeur du compteur (CR) d'une manière pouvant être affectée à la suite d'instructions respectives, et la longueur de l'instruction de la suite respective correspondant à la longueur de l'instruction de saut inconditionnel dans la liste de branchements (VL) ; et
- on génère le code de programme (SC) pour un branchement sur les adresses transposées sur le matériel cible (M2), le code de programme (SC) déterminant la cible du saut relative au code objet (OC2) pour le matériel cible (M2) de l'instruction correspondante de saut inconditionnel de la liste de branchements (VL) du code assembleur (AC1) lors de son exécution après le déroulement de la séquence d'instructions (SEQ), à l'aide de la valeur du compteur (CR) et à l'aide de la transposition des adresses, et réalisant le branchement sur cette cible de saut.

2. Procédé selon la revendication 1, **caractérisé en ce qu'**on utilise un espace de mémoire du matériel cible (M2) comme compteur.

3. Procédé selon la revendication 1, **caractérisé en ce qu'**on utilise un registre du matériel cible (M2) comme compteur.

4. Procédé selon une des revendications précédentes, **caractérisé en ce que**
- les cibles de saut dans le code objet (OC2) pour le matériel cible (M2) correspondant à la transposition d'adresse des cibles de saut des instructions de saut inconditionnelles de la liste de branchements (VL), sont déposées dans un tableau (TAB) ; et
- après le déroulement de la séquence d'instructions (SEQ), on définit un indice à partir de la valeur (CR) du compteur permettant d'extraire du tableau (TAB), la cible du saut à déterminer dans le code objet (OC2) pour le matériel cible (M2).

5. Procédé selon une revendication 1 à 3, **caractérisé en ce que** le code du programme pour un branchement détermine lors de son exécution la cible du saut pour le branchement sur le matériel cible, **en ce que**
- la valeur du compteur est modifiée pas à pas, respectivement par l'exécution d'une opération inverse pour effectuer l'opération de modification, jusqu'à sa concordance avec une valeur de comparaison (VVAL) qui est égale à une valeur initiale (IVAL) du compteur ou qui en est issue par l'application de l'opération de modification ;
- un emplacement respectif du programme dans le code objet (OC2) pour le matériel cible (M2) correspondant à la cible de saut d'une instruction de saut de la liste de branchements (VL) est affecté à chaque pas de telle sorte que lors de la survenance d'une concordance, l'emplacement du programme attribué au pas correspondant représente la cible du saut à déterminer.

6. Procédé selon une des revendications précédentes, **caractérisé en ce que** le compteur est initialisé à une valeur (IVAL) non égale à zéro lors de l'exécution du programme, et les instructions nommées ou bien la suite d'instructions modifient respectivement la valeur (CR) du compteur par multiplication avec une constante qui est égale à une puissance 2^{m} du chiffre 2 de manière à réaliser la modification par décalage de la configuration de bits représentant la valeur binaire du compteur (CR) de m positions de bits.
